# EUROPÄISCHE PATENTANMELDUNG

(11) **EP 4 235 481 A1**
(43) Veröffentlichungstag der Anmeldung: **30.08.2023**
(21) Anmeldenummer: 22158776.9
(22) Anmeldetag: 25.02.2022
(51) Int. Cl.: G06F 30/18, G06F 113/04, G06F 119/06

(54) **VERFAHREN ZUM ERSTELLEN EINES LASTPROFILS**

(71) Anmelder: Siemens Aktiengesellschaft, 80333 München (DE)
(72) Erfinder: Niessen, Stefan, 91056 Erlangen (DE); Thiem, Sebastian, 91413 Neustadt an der Aisch (DE); Metzger, Michael, 85570 Markt Schwaben (DE); Müller, Katrin, 10713 Berlin (DE); Nikonov, Anton, 199178 Saint Petersburg (RU)
(74) Vertreter: Siemens Patent Attorneys

(57) **Zusammenfassung**

Verfahren zum Erstellen eines Lastprofils für die Bestimmung von Systemparameter eines Energiesystems, unter Verwendung von gespeicherte Datensätzen umfassend Lastprofile mit zugeordneten Metadaten. Es wird ein zu den Anforderungen möglichst ähnlicher Datensatz bestimmt. Dieser wird mithilfe einer Regressionsgleichung, die mithilfe der gespeicherten Datensätze gewonnen wird, an die Anforderungsdaten angepasst. Anhand des angepassten ausgewählten Lastprofils können die Systemparameter bestimmt werden. Bei der Auswahl des Datensatzes kann zusätzlich dessen Qualität berücksichtigt werden.

## Beschreibung

Die Erfindung betrifft ein Verfahren zum Erstellen eines Lastprofils, das für die Bestimmung von Systemparametern eines Energiesystems verwendet werden kann.

Ein Energiesystem besteht aus einer oder mehreren Komponenten zur Bereitstellung von Energie, insbesondere Strom, Wärme oder Kälte. In vielen Fällen fasst man auch die zugehörige Infrastruktur für Transport, Verteilung oder Speicherung dieser Energiearten unter diesen Begriff.

Für die Planung, Errichtung oder den Ausbau eines Energiesystems müssen Annahmen über die zukünftige Nutzung, insbesondere Lastanforderungen, und über technische, wirtschaftliche und andere Rahmenbedingungen gemacht werden, damit das Energiesystem einerseits den Anforderungen gerecht wird und andererseits nicht zu stark überdimensioniert und damit zu kostenintensiv ist. Beispiele für solche relevanten Daten sind Zeitreihen des Bedarfs an Energie (beispielsweise Strom, Heizung oder Kühlung), die erforderliche Zuverlässigkeit der Energieversorgung, Energiekosten und andere. Ausgehend von diesen Annahmen kann dann eine möglichst passende Auslegung des Energiesystems bestimmt werden, indem insbesondere die im Hinblick auf die Anforderungen richtigen Energiekomponenten ausgewählt und richtig dimensioniert werden. Mit anderen Worten, die Systemparameter des Energiesystems können dann für die vorgegebenen Anforderungen optimiert werden. Hierzu können mathematische Optimierungsverfahren eingesetzt werden.

Es ist daher notwendig, dass die Annahmen insbesondere für die zukünftige Lastanforderung, also das der Auslegung zugrunde zu legende Lastprofil, möglichst nahe an der Betriebsrealität des Energiesystems während dessen Lebensdauer liegen. Wenn die Annahmen stark von der Betriebsrealität abweichen, besteht die Gefahr einer nicht ausreichenden Energieversorgung und dadurch notwendigen Nachrüstungen, und/oder die Gefahr, dass das Energiesystem mit einem ungünstigen Wirkungsgrad und hohem Schadstoffausstoß, beispielsweise CO₂ -Ausstoß, arbeitet.

Für die Abschätzung der zukünftigen Lastanforderungen können heuristische Methoden eingesetzt werden. Beispielsweise kann eine Heizanlage so ausgelegt werden, dass sie das zugehörige Gebäude bei einer Außentemperatur von -12°C auf einer Raumtemperatur von 20°C halten kann. Dabei wird jedoch weder die Häufigkeitsverteilung der Außentemperaturen noch die mögliche Wechselwirkung mit einer vorhandenen Stromwärme-Kopplungsanlage in Verbindung mit den elektrischen Lastprofilen des Gebäudes bzw. der Kopplungsanlage berücksichtigt. In solchen Fällen wird die Heizanlage zu groß dimensioniert, was zu unnötig hohem Schadstoffausstoß und zu hohen Kosten führt.

Eine weitere Methode zur Abschätzung verwendet ein Lastprofil, das für eine möglichst ähnliche Situation der Lastanforderung bekannt ist. Unter einem Lastprofil versteht man den zeitlichen Verlauf der abgenommenen Leistung (beispielsweise Strom, Wärme oder Gas) über einen bestimmten Zeitraum. Derartige Lastprofile gibt es für unterschiedliche Verbraucher (beispielsweise Privathaushalte oder bestimmte Industriebetriebe oder -zweige), unterschiedliche Zeiträume (beispielsweise über einen Tag oder über ein Jahr) und in unterschiedlicher Auflösung (beispielsweise mit stündlicher oder monatlicher Granularität). Sie beruhen in der Regel auf Messungen, die in vielen Fällen durch Schätzungen ergänzt werden. Die Erstellung von Lastprofilen ist allerdings aufwändig, und sie sind nur sehr lückenhaft und mit unklarer Zuverlässigkeit ihrer Daten vorhanden - oft ist unklar, auf welcher Datenbasis sie beruhen und ob es sich um Mess- oder um Schätzwerte handelt. Teilweise kann es sich um Standardlastprofile handeln, die typische Verbrauchsmuster einer großen Anzahl von Verbrauchern widerspiegeln. Die Entscheidung, welches Lastprofil als Grundlage für das geplante Energiesystem herangezogen wird und ob oder inwieweit es auf Größe des auszulegenden Systems skaliert werden muss, wird in der Regel von Experten getroffen.

Die bekannten Methoden sind ungenau und ermöglichen außerdem keine Aussage darüber, in welchem Ausmaß ein aus der Datenbank ausgewähltes Lastprofil mit der Betriebsrealität des Energiesystems übereinstimmt, d.h. wie passend es ist. Ferner können keine Aussagen über die Qualität eines Lastprofils getroffen werden, beispielsweise wie vollständig oder zuverlässig dessen Daten sind.

Der Erfindung liegt das Problem zugrunde, ein verbessertes Verfahren zur Erstellung eines Lastprofils anzugeben, das für Festlegung von Systemparametern für ein Energiesystem verwendet werden kann. Das erstellte Lastprofil soll ermöglichen, dass das Energiesystem technisch besser arbeitet, insbesondere mit verringertem Primärenergiebedarf und Schadstoffausstoff und mit verbessertem Wirkungsgrad.

Diese Aufgabe wird gelöst durch ein Verfahren mit den Merkmalen des Patentanspruchs 1 und durch eine Anordnung gemäß Patentanspruch 12.

Die Erfindung sieht eine Datenbank mit Datensätzen vor, wobei ein Datensatz ein Lastprofil mit zugehörigen Metadaten umfasst. Anhand dieser Datensätze oder einer Auswahl dieser Datensätze wird eine Regressionsgleichung erstellt, die die Abhängigkeit der Lastprofile von den Metadaten - zumindest näherungsweise - beschreibt. Für das zu erstellende Energiesystem liegen ein oder mehrere Anforderungsdaten vor, diese Anforderungsdaten beziehen sich auf Eigenschaften, die zumindest teilweise in den Metadaten der gespeicherten Lastprofile (oder zumindest eines gespeicherten Lastprofils) erfasst sind.

Das Verfahren sieht weiter vor, mindestens einen Datensatz der Datenbank auszuwählen, der möglichst ähnlich ist, d.h. dessen Metadaten ein hohes Ähnlichkeitsmaß zu den Anforderungsdaten aufweisen. Es handelt sich demnach um einen ausreichend passenden Datensatz. Das damit ausgewählte Lastprofil wird mithilfe der Regressionsgleichung an die Anforderungsdaten bzw. an mindestens ein Anforderungsdatum angepasst. Für die Festlegung der Systemparameter des Energiesystems kann dann das angepasste ausgewählte Lastprofil verwendet werden.

Metadaten können beispielsweise folgende Größen sein:
- Zeitliche Angaben (beispielsweise Datum und Uhrzeit
- Geografische Position
- Art der Verbraucher wie z.B. Industriebranche, öffentliches Gebäude
- (ggf. mit Unterkategorien Verwaltungsbau, Schule, Schwimmbad, Bahnhof, Flughafen...), privater Haushalt (ggf. mit Unterkategorien Ein- oder Mehrfamilienhaus)
- Granularitätsstufe der Daten (beispielsweise ob es sich um den Lastgang der gesamten Anlage handelt oder nun um den Lastgang eines Teilprozesses)
- Errichtungsjahr
- Hersteller bzw. Errichter
- Energiestandard des Gebäudes
- verbaute Energiekomponenten
- Zeitpunkt und Art von Betriebsstörungen
- Wetterdaten während der Erfassung des Lastprofils
- Daten zu Konjunktur, Verkehrsaufkommen oder anderen Wirtschaftsdaten (beispielsweise Produktionsleistung des Industriebetriebs oder Anzahl Besucher von öffentlichen Gebäuden), Energiepreisen, Rohstoffpreisen während der Erfassung des Lastprofils.

Metadaten können lastspezifische Daten, also Angaben zu Verbrauchern sein (beispielsweise Industriebranche, Energiestandard von Gebäuden, geografische Position u.a.) oder allgemeine, d.h. nicht-lastspezifische Daten sein (beispielsweise Wetterdaten, Konjunkturdaten).

Die Datensätze, d.h. die Lastprofile und Metadaten, können aus Messreihen von in Betrieb befindlichen Energiesystemen bzw. angeschlossener Verbraucher gewonnen sein, oder es kann sich um Planungsdaten aus anderen Auslegungsprojekten für Energiesysteme handeln. Die Lastprofile können auch sogenannte Standardlastprofile sein, bei diesen erfolgt keine individuelle Lastgangmessung, sondern sie beruhen auf einem kategoriespezifischen (insbesondere branchenspezifischen) Verbrauchsmuster einer für die statistische Aussagekraft hinreichend großen Anzahl von Verbrauchern. Diese verschiedenen Ausprägungen sind im Folgenden von den Begriffen Lastprofil und Datensatz umfasst.

Es liegt im Rahmen der Erfindung, die Regressionsgleichung auf der Basis einer Auswahl der gespeicherten Datensätze zu erstellen. Dabei kann die Auswahl anhand einer oder mehrerer Metadaten erfolgen.

In einer Ausführungsform der Erfindung wird die Regressionsgleichung bei Aufnahme neuer Datensätze in die Datenbank neu berechnet. Durch die Vergrößerung der Datenbasis werden so die Genauigkeit der Gleichung und die Richtigkeit der damit gewonnenen Systemparameter verbessert.

In einer Ausführungsform wird die Regressionsgleichung um weitere Parameter ergänzt, d.h. bei der Regressionsanalyse wird zunächst eine erste Anzahl von Metadaten berücksichtigt und eine Regressionsgleichung erstellt, später werden weitere Metadaten zusätzlich berücksichtigt und es wird eine verbesserte Regressionsgleichung erstellt. Dies ist insbesondere sinnvoll, wenn die anfänglich in der Datenbank zur Verfügung stehenden Datensätze nur relativ wenige Metadaten enthalten, und diese Metadaten sich nur teilweise auf dieselben Größen beziehen, also nur wenige Überschneidungen der gespeicherten Größen vorhanden sind. Die Ergänzung um weitere Parameter kann mit einem selbstlernenden Algorithmus erfolgen. Dabei werden wiederholt Regressionsanalysen durchgeführt, insbesondere auch mit anderen zugänglichen Daten, die nicht in der Datenbank gespeichert sind, und die Regressionsgleichung und die Datenbank werden mit diesen Daten ergänzt. Beispielsweise können so nachträglich Wetterdaten in die Datenbank und in die Regressionsgleichung aufgenommen werden.

Als Ähnlichkeitsmaß, das bei der Auswahl des Datensatzes zugrunde gelegt wird, kann die Ähnlichkeit der Metadaten des Datensatzes mit den Anforderungsdaten verwendet werden. Insbesondere kann die mittlere quadratische Abweichung zwischen den Metadaten und den Anforderungsdaten betrachtet und mit einem Schwellwert verglichen werden oder minimiert werden, um einen ausreichend ähnlichen Datensatz, also ein ausreichend passendes Lastprofil, zu ermitteln. In einer Ausführungsform der Erfindung wird der Datensatz mit der höchsten Ähnlichkeit ausgewählt.

Es liegt im Rahmen der Erfindung, mehrere Datensätze auszuwählen, um die Systemparameter zu bestimmen. Beispielsweise kann das auszulegende Energiesystem zur Versorgung einer Mehrzahl von Betrieben vorgesehen sein, und es werden die für die Betriebe jeweils passendsten Datensätze ausgewählt und in geeigneter Weise kombiniert, beispielsweise werden die ausgewählten Lastprofile addiert.

In einer Ausführungsform der Erfindung wird einem Datensatz der Datenbank ein Bewertungsfaktor zugeordnet, der die Qualität des Datensatzes widerspiegelt. Unter den Begriff Qualität werden Aspekte der Zuverlässigkeit der Datenbasis und/oder Glaubwürdigkeit bzw. Konsistenz und/oder Vollständigkeit der Daten gefasst. Beispielsweise ist die Vollständigkeit der Metadaten ein Indiz für die Qualität des Datensatzes. Bei der Auswahl des Datensatzes zur Bestimmung der Systemparameter wird dann neben dem Ähnlichkeitsmaß auch dessen Bewertungsfaktor berücksichtigt. Für die Bestimmung des Bewertungsfaktors sind verschiedene Methoden einzeln oder in Kombination möglich, beispielsweise:
- Anzahl bzw. Vollständigkeit zugeordneter Metadaten
- Analyse des Lastprofils in sich, insbesondere hinsichtlich einer Autokorrelation
- Analyse des Lastprofils durch Vergleich mit gespeicherten, vorzugsweise ähnlichen und/oder branchenspezifischen Lastprofilen, insbesondere Vergleich bestimmter Kenngrößen
- Autokorrelation und/oder Korrelation mit anderen Lastprofilen

Ferner kann vorgesehen sein, ein Lastprofil der Datenbank mit teilweise fehlerhaften Messpunkten zu korrigieren, indem die fehlerhaften Messpunkte durch - ggf. weiter angepasste - Messpunkte eines anderen Lastprofils ersetzt werden. Dazu wird als das andere Lastprofil ein Lastprofil ausgewählt, dass möglichst ähnlich ist und/oder einen hohen Bewertungsfaktor aufweist, ggf. kann das ausgewählte andere Lastprofil mithilfe der Regressionsgleichung angepasst werden.

Mithilfe des angepassten ausgewählten Lastprofils können Systemparameter des geplanten Energiesystems so festgelegt werden, dass ein verbesserter Wirkungsgrad erreicht wird. Ergibt sich beispielsweise aus dem Lastprofil ein hoher Energiebedarf zu bestimmten Tageszeiten, insbesondere mittags, kann das Energiesystem mit einer Photovoltaik-Anlage ausgerüstet werden, die ggf. um einen Batteriespeicher ergänzt wird, wobei die Kapazität des Speichers und die Größe der PV-Anlage mittels Energiesystemdesign durch ein mathematisches Optimierungsproblem bspw. kostenoptimal dimensioniert werden [vgl.: "Digitale Dekarbonisierung, Springer, 2021" und die Systemparameter festgelegt werden. Durch die auf den Bewertungsfaktor gestützte Auswahl des Lastprofils ist sichergestellt, dass dem Lastprofil eine zuverlässige Datenbasis zugrunde liegt.

Das Verfahren wird vorzugsweise mit einem Computerprogramm durchgeführt. Wenn der Programmcode durch einen Prozessor ausgeführt wird, werden die beschriebenen Schritte ausgeführt. Das Programm weist eine Schnittstelle zu einer Datenbank auf, in der Datensätze umfassend Lastprofile und Metadaten gespeichert sind.

Die Erfindung wird im Folgenden anhand von Ausführungsbeispielen, die in den Figuren schematisch dargestellt sind, näher erläutert. Es zeigen:
Fig. 1: ein erstes Ausführungsbeispiel
Fig. 2: ein zweites Ausführungsbeispiel.

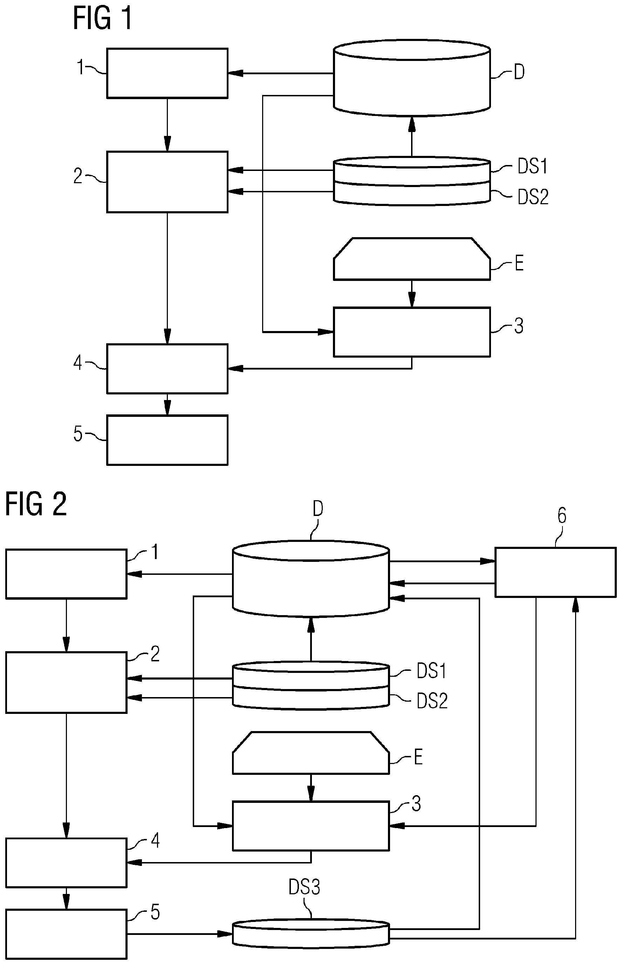

Fig. 1 zeigt schematisch eine Datenbank D, in der Datensätze gespeichert sind, wobei ein Datensatz ein Lastprofil mit zugeordneten Metadaten umfasst. In diesem Beispiel beruhen die Lastprofile auf Messungen des Strombedarfs eines Betriebs in bestimmten Branchen (vertikale Märkte) jeweils über einen bestimmten Zeitraum und mit einer bestimmten zeitlichen Auflösung. Weiter sind die Lastprofile gekennzeichnet durch Größe des Betriebs (z.B. Mitarbeiterzahl), Gebäudegröße, Errichtungsjahr, geografische Position, Wetterdaten, Branche und weitere. Diese Daten bilden die Metadaten eines Datensatzes, der Strombedarf in Abhängigkeit von der Zeit bildet das Lastprofil des Datensatzes.

Für die Datensätze wird in dem mit 1 gekennzeichneten Verfahrensschritt eine Regressionsanalyse durchgeführt. Es wird der Einfluss einiger oder aller Parameter, die in den Metadaten repräsentiert sind, auf das Lastprofil ermittelt. Dabei kann eine Untergruppe der Datensätze verwendet werden, beispielsweise nur Lastprofile von Betrieben, deren Gebäude in den letzten 10 Jahren errichtet wurden. Es ist möglich, bei der Regressionsanalyse die Abhängigkeit von bestimmten Größen bzw. Metadaten nicht zu untersuchen, beispielsweise können Wetterdaten unberücksichtigt bleiben. Es wird demnach eine Regressionsgleichung aufgestellt, die die Abhängigkeit des Strombedarfs zu einem bestimmten Zeitpunkt von den berücksichtigten Parametern angibt.

Die Datenbank kann durch Hinzufügung neuer Datensätze DS1, DS2 sukzessive ergänzt werden, wobei diese Datensätze Lastprofile mit Metadaten umfassen. Die Regressionsgleichung wird unter Berücksichtigung der zusätzlichen Datensätze modifiziert (Schritt 2).

Mit E ist ein geplantes Energiesystem bezeichnet, für das Anforderungsdaten bekannt sind. Die Anforderungsdaten betreffen insbesondere die Parameter, die in den Metadaten der Lastprofile erfasst sind. Beispielsweise bezeichnen sie die Branche, die das Energiesystem versorgen soll, die Anzahl und Größe der Betriebe und deren geografische Positionen.

In Schritt 3 wird ein für das Energiesystem passender, vorzugsweise der passendste Datensatz, d.h. der mit dem höchsten Ähnlichkeitsmaß, ausgewählt. Hierzu werden die Metadaten der Datensätze mit den Anforderungsdaten verglichen, und es wird beispielsweise die mittlere quadratische Abweichung betrachtet. Es können auch mehrere Datensätze ausgewählt und miteinander kombiniert werden; das ist beispielsweise dann sinnvoll, wenn die Datensätze Einzelprozesse (wie Schritte eines Herstellverfahrens) betreffen und durch Kombination, insbesondere Addition, ein Datensatz mit einem Lastprofil für den gesamten Prozess (beispielsweise das gesamte Herstellverfahren) erhalten wird.

In Schritt 4 wird der ausgewählte Datensatz mithilfe der Regressionsgleichung an die Anforderungsdaten des Energiesystems angepasst. Beispielsweise erfolgt eine Anpassung an die geplante geografische Position des Energiesystems. Dadurch wird ein Lastprofil erhalten, das die im Betrieb erwartete Lastanforderung realistischer wiedergibt als ein aus dem Stand der Technik bekanntes Lastprofil, es ist also noch passender.

Mit dem angepassten ausgewählten Lastprofil lassen sich in Schritt 5 die Systemparameter des geplanten Energiesystems (beispielsweise Art und Anzahl der benötigten Komponenten und ihre Dimensionierungen) so bestimmen, dass das mit diesen Systemparametern hergestellte Energiesystem im Betrieb mit hohem Wirkungsgrad arbeitet und eine hohe Versorgungssicherheit gewährleistet.

In Fig. 2 ist eine Ausführungsform der Erfindung schematisch dargestellt, bei der die Auswahl des Datensatzes in Schritt 3 nicht nur anhand der beschriebenen Metadaten der Datensätze, die technische und/oder wirtschaftliche Parameter beschreiben, erfolgt. Zusätzlich wird ein Bewertungsverfahren 6 für die Datensätze durchgeführt, und bei der Auswahl des Datensatzes wird ein dabei gewonnener Bewertungsfaktor berücksichtigt, der eine Qualität des Datensatzes beschreibt. Mit anderen Worten, es wird bei der Auswahl ein nicht nur passender, sondern gleichzeitig gut bewerteter Datensatz ausgewählt.

Dieser Bewertungsfaktor kann direkt in Schritt 3 für die Auswahl einfließen. Er kann alternativ oder zusätzlich in dem betreffenden Datensatz gespeichert werden und stellt dann quasi ein weiteres Metadatum dar, beide Möglichkeiten sind in der Figur durch Pfeile symbolisiert. Der Bewertungsfaktor kann geändert werden, wenn die Qualität des Datensatzes sich ändert.

Für die Auswahl eines Datensatzes kann ein erster Schwellwert für das Ähnlichkeitsmaß und ein zweiter Schwellwert für die Qualität herangezogen werden, die beide mindestens erreicht sein müssen.

Es liegt im Rahmen der Erfindung, eines oder mehrere der im Folgenden beschriebenen Bewertungsverfahren 6 für die Qualität eines Datensatzes durchzuführen. Dabei ist es vorteilhaft, die jeweiligen Kriterien so zu verknüpfen und ggf. zu normieren, dass der berechnete Bewertungsfaktor Qᵢ (i= a, ...f) in einem vorgegebenen Intervall liegt, beispielsweise zwischen null und eins, wobei ein hoher Wert einer hohen Qualität entspricht:
a) Anzahl und/oder Vollständigkeit der gespeicherten Metadaten: Je mehr Informationen über das Lastprofil vorliegen, je mehr Metadaten also erfasst sind, desto höher ist der Bewertungsfaktor. Beispielsweise kann als Bewertungsfaktor Qₐ der Prozentsatz der befüllten Metadaten-Datenfelder des Datensatzes bestimmt werden.
b) Analyse des Verlaufs des Lastprofils: Prüfung auf sich wiederholende Abschnitte oder anderweitig korrelierende Abschnitte. Dies stellt oft einen Hinweis auf Duplizierung von Messpunkten dar anstelle tatsächlicher Messungen über den gesamten Zeitraum und ist negativ zu bewerten. Mithilfe einer Autokorrelationsfunktion kann das Fehlen bzw. das Ausmaß von Wiederholungen oder anderen Korrelationen festgestellt werden und als Bewertungsfaktor Q_{b} quantifiziert werden.
c) Vergleich mit branchenspezifischen Kenngrößen (Metriken) des Lastprofils, wie beispielsweise maximale Lastanforderung, Lastfaktor ( d.h. der Quotient aus mittlerer Last und maximaler Last in einem bestimmten Zeitraum) und/oder Lastverteilung. Hierzu wird mithilfe der Metadaten eine Kategorisierung der bekannten Datensätze nach verschiedenen Branchen, insbesondere vertikalen Märkten, vorgenommen. Eine Kenngröße wie beispielsweise die maximale Last des zu bewertenden Lastprofils wird dann mit anderen Lastprofilen einer oder mehrerer passender Branchen verglichen. In die Berechnung eines Bewertungsfaktors Q_{c} kann die (normierte) Differenz zwischen beispielsweise branchenspezifischer maximaler Lastanforderung und der maximalen Lastanforderung des betrachteten Lastprofils in geeigneter Weise einfließen, wobei Q_{c} vorzugsweise so berechnet wird, dass der Wert umso höher ist, je geringer diese Differenz ist.
d) Vergleich mit Kenngrößen bekannter Datensätze. Es ist auch möglich, eine Bewertung vorzunehmen, wenn keine oder nicht ausreichende Metadaten für das zu bewertende Lastprofil vorhanden sind, um es einer bestimmten Branche zuzuordnen bzw. zu kategorisieren. Es werden dann Metriken (maximale Last, Basislast o.a.) des Lastprofils ermittelt, und danach wird die Zuordnung zu einer bestimmten Kategorie oder Branche vorgenommen. Dann kann ein Bewertungsfaktor Q_{d} wie unter c) beschrieben bestimmt werden.
e) Korrelation mit bekannten Lastprofilen: ein niedriger Bewertungsfaktor Qₑ wird zugeordnet, wenn das zu bewertende Lastprofil stark mit einem bekannten korreliert, beispielsweise proportionale Werte aufweist, da dies ein Hinweis auf ein Duplikat ist. Mit an sich bekannten statistischen Methoden kann der Bewertungsfaktor so berechnet werden, dass er den zusätzlichen Informationsgewinn und damit den Wert des zu bewertenden Lastprofils widerspiegelt.
   Ebenso wird ein niedriger Bewertungsfaktor Qₑ zugeordnet, wenn das Lastprofil keine typischen Muster aufweist, sondern den Anschein von willkürlichen oder zufälligen Daten hat. Dies lässt sich beispielsweise dann feststellen, wenn die Autokorrelation dem Muster von Rauschen entspricht oder sehr nahe an einer Stoßfunktion liegt. Es ist vorteilhaft, die für den Vergleich heranzuziehenden bekannten Lastprofile anhand ihrer Metadaten zu selektieren, um die Datenmenge zu reduzieren.
f) Ersteller : Es kann ein Bewertungsfaktor Q_{f} für den Ersteller des Datensatzes vergeben werden. Ersteller bezeichnet die Entität, die den Datensatz gemessen und/oder in die Datenbank gestellt hat, also beispielsweise ein Energieversorgungsunternehmen oder ein wissenschaftliches Institut. Wie auch bei den anderen Bewertungsfaktoren kann dieser im Datensatz als weiteres Metadatum gespeichert werden.

Überprüfung der Bewertungen: Nach Ermittlung eines Bewertungsfaktors, beispielsweise gemäß einer oder mehrerer der vorstehend genannten Methoden, kann eine Überprüfung des Resultats vorgenommen werden. Mit statistischen Methoden können die bekannten Datensätze und ebenso neu aufgenommene Datensätze in der Datenbank hinsichtlich ihrer Bewertung überprüft werden. Daraus können sich geänderte Bewertungsfaktoren ergeben. Es kann beispielsweise die Forecastable Component Analysis angewandt werden, mit der eine Dimensionsreduktion von multidimensionalen Zeitreihen erzielt werden kann. Das Verfahren berücksichtigt zeitliche Korrelationen der Ausgangszeitreihen und sucht nach einem mathematischen Unterraum (Variablentransformation) mit der höchsten Vorhersagbarkeit. Ein anderes anwendbares Verfahren ist die Principal Component Analysis.

Es ist vorteilhaft, die gemäß einem oder mehrerer der beschriebenen Bewertungsverfahren bestimmten Bewertungsfaktoren in dieser Weise zu überprüfen und ggf. anzupassen. Wenn mehrere der Bewertungsmethoden durchgeführt werden, kann ein Gesamtbewertungsfaktor Q aus den einzelnen Bewertungsfaktoren Qᵢ bestimmt werden, beispielsweise durch Multiplikation.

Nach Errichtung des geplanten Energiesystems können in dessen Betrieb Messdaten, also insbesondere ein neuer Datensatz DS3 mit einem Lastprofil und zugeordneten Metadaten, gewonnen werden. Dieser Datensatz wird dann ebenfalls in der Datenbank D gespeichert. Er kann auch ein Bewertungsverfahren 6 durchlaufen wie oben erläutert.

Ferner kann die Qualität einzelner Lastprofile gesteigert werden, indem eine Änderung bzw. Korrektur an ihm vorgenommen wird. Beispielsweise können Fehler durch Störungen beim Erfassen des Lastprofils aufgetreten sein, die zu einzelnen fehlerhaften Messpunkten (Ausreißer) oder Lücken in der Messreihe führen. Derartige fehlerhafte Abschnitte können durch Interpolation korrigiert werden, oder durch Werte aus einem anderen Lastprofil. Dafür wird vorzugsweise ein anderes Lastprofil verwendet, dass ein hohes Ähnlichkeitsmaß aufweist und/oder derselben Kategorie oder Branche angehört und/oder einen hohen Bewertungsfaktor aufweist. Es können auch mehrere andere Lastprofile kombiniert werden. Es kann eine statistische Methode, insbesondere eine sogenannte Hauptkomponentenanalyse (Principal Component Analysis) angewandt werden, um kondensierte Komponenten (bzgl. einer Variablentransformation) zu identifizieren und durch Auswahl geeigneter Komponenten/Cluster eine Extrapolation von historisch identifizierten Zusammenhängen auf neue Anwendungsfälle zu verbessern.

Die in den Ausführungsbeispielen beschriebenen Merkmale und Aspekte der Erfindung können selbstverständlich miteinander in unterschiedlicher Weise kombiniert werden. Insbesondere können die Merkmale nicht nur in den beschriebenen Kombinationen, sondern auch in anderen Kombinationen oder für sich genommen verwendet werden.

Die Erfindung ermöglicht, für ein Energiesystem automatisch ein ausreichend passendes, vorzugsweise das passendste Lastprofil zu identifizieren und an die Anforderungen des Energiesystems anzupassen. In einer Weiterbildung kann ein ausreichend passendes und gleichzeitig qualitativ ausreichendes Lastprofil identifiziert und angepasst werden. Dadurch können die Systemparameter für das Energiesystem so festgelegt werden, dass es im Betrieb mit hoher Effizienz, hohem Wirkungsgrad und verringertem Schadstoffausstoß arbeitet. Durch sukzessive Vergrößerung der Datenbasis wird die Anpassung weiter verbessert.

## Patentansprüche

1. Verfahren zur Erstellung eines Lastprofils für die Auslegung eines Energiesystems, wobei für das Energiesystem Anforderungsdaten vorhanden sind,
unter Verwendung einer Datenbank (D) mit Datensätzen, wobei ein Datensatz ein Lastprofil mit zugehörigen Metadaten umfasst,
mit folgenden Schritten
- Erstellen einer Regressionsgleichung für die Datensätze, die die Abhängigkeit des Lastprofils von den Metadaten mindestens näherungsweise beschreibt,
- Auswählen von mindestens einem Datensatz mit einem ausreichend hohen Ähnlichkeitsmaß zu den Anforderungsdaten
- Anpassen des Lastprofils des ausgewählten Datensatzes an mindestens ein Anforderungsdatum des Energiesystems (E) mithilfe der Regressionsgleichung.

2. Verfahren nach Anspruch 1, **dadurch gekennzeichnet, dass** unter Verwendung des angepassten ausgewählten Lastprofils Systemparameter des Energiesystems (E) festgelegt werden.

3. Verfahren nach einem der vorhergehenden Ansprüche,
**dadurch gekennzeichnet, dass** die Regressionsgleichung auf Basis einer Auswahl der Datensätze erstellt wird und/oder für die Abhängigkeit des Lastprofils von einer Auswahl der Metadaten erstellt wird.

4. Verfahren nach einem der vorhergehenden Ansprüche,
**dadurch gekennzeichnet, dass** die Regressionsgleichung bei Aufnahme weiterer Datensätze (DS1, DS2) in die Datenbank (D) neu berechnet wird.

5. Verfahren nach dem vorhergehenden Anspruch, **dadurch gekennzeichnet, dass** die Regressionsgleichung um weitere Metadaten ergänzt wird, wobei eine Berechnung der Korrelation unter Einbeziehung des neuen Datensatzes durchgeführt wird.

6. Verfahren nach einem der vorhergehenden Ansprüche,
**dadurch gekennzeichnet, dass** ein Lastprofil des anhand der Systemparameter erstellten Energiesystems mit zugehörigen Metadaten als neuer Datensatz in der Datenbank (D) gespeichert wird

7. Verfahren nach einem der vorhergehenden Ansprüche,
**dadurch gekennzeichnet, dass** als Ähnlichkeitsmaß beim Auswählen des mindestens einen Datensatzes die Ähnlichkeit der Metadaten mit den Anforderungsdaten verwendet wird, insbesondere die mittlere quadratische Abweichung zwischen Anforderungsdaten und Metadaten der gespeicherten Datensätze.

8. Verfahren nach einem der vorhergehenden Ansprüche,
**dadurch gekennzeichnet, dass** beim Auswählen des mindestens einen Datensatzes neben dem Ähnlichkeitsmaß Bewertungsfaktoren (Q) für die gespeicherten Datensätze verwendet werden.

9. Verfahren nach Anspruch 8, **dadurch gekennzeichnet, dass** für die Bestimmung des Bewertungsfaktors des Datensatzes die Anzahl und/oder Vollständigkeit seiner zugeordneten Metadaten verwendet wird.

10. Verfahren nach einem der vorhergehenden Ansprüche 8 bis 9, **dadurch gekennzeichnet, dass** für die Bestimmung des Bewertungsfaktors des Datensatzes das Lastprofil auf Autokorrelation analysiert wird.

11. Verfahren nach einem der vorhergehenden Ansprüche 8 bis 10, **dadurch gekennzeichnet, dass** für die Bestimmung des Bewertungsfaktors des Datensatzes das Lastprofil mit gespeicherten, vorzugsweise ähnlichen und/oder branchenspezifischen Lastprofilen, verglichen wird.

12. Vorrichtung oder System zur Datenverarbeitung, umfassend Mittel zur Ausführung des Verfahrens nach einem der Ansprüche 1 bis 12.

13. Computerprogrammprodukt, umfassend Befehle, die bei der Ausführung des Programms durch einen Computer diesen veranlassen, ein Verfahren nach einem der vorhergehenden Ansprüche auszuführen.
